# EUROPÄISCHE PATENTSCHRIFT

(11) **EP 1 706 192 B1**
(45) Veröffentlichungstag und Bekanntmachung des Hinweises auf die Patenterteilung: **18.02.2009**
(21) Anmeldenummer: 04803229.6
(22) Anmeldetag: 23.11.2004
(51) Int. Cl.: B01D 29/52, B01D 29/66, B01D 29/96

(54) **FILTERVORRICHTUNG**
FILTER DEVICE
DISPOSITIF FILTRANT

(30) Priorität: 30.01.2004 DE 102004004756
(43) Veröffentlichungstag der Anmeldung: 04.10.2006
(60) Teilanmeldung: 08021698.9
(73) Patentinhaber: Hydac Process Technology GmbH, 66538 Neunkirchen (DE)
(72) Erfinder: WNUK, Ralf, 66450 Bexbach (DE); MARETYAK, Markus, 66978 Clausen (DE)
(74) Vertreter: Bartels, Martin Erich Arthur
(86) Internationale Anmeldenummer: PCT/EP2004/013275
(87) Internationale Veröffentlichungsnummer: WO 2005/072845

(56) Entgegenhaltungen:
- EP-A- 0 900 584
- DE-A1- 2 110 864
- DE-A1- 3 405 179
- DE-A1- 19 956 859
- GB-A- 918 156

## Beschreibung

Die Erfindung betrifft eine Filtervorrichtung für den Einsatz von Filterelementen gemäß der Merkmalsausgestaltung des Oberbegriffes des Patentanspruches 1.

Eine Filtervorrichtung, insbesondere Rückspülfiltervorrichtung, ist durch die WO 98/42426 bekannt. Bei der bekannten Rückspülfiltervorrichtung ist ein Teil der eingesetzten Filterelemente konisch ausgebildet, insbesondere in Form von sog. Spaltsiebrohr-Filterelementen. Aufgrund der konischen Ausbildung ist der Abstand zwischen den einzelnen konischen Spaltsiebrohr-Filterelementen oder zwischen diesen und zylindrischen Filterelementen vergrößert, mit der Folge, dass auch der Ausströmraum im Filtergehäuse vergrößert und mithin der Abströmwiderstand im Filterbetrieb erniedrigt ist. Beim Rückspülen ist das konische Filterelement gegen einen zylindrischen eindeutig im Vorteil. Ursache hierfür ist in erster Linie der relativ größere Austrittsquerschnitt der konischen Filterelemente gegenüber zylindrischen bei gleicher Filteroberfläche. Da der Austrittsquerschnitt bei den konischen Filterelementen gegenüber dem durch die Filteroberfläche gebildeten Eintrittsquerschnitt, also der freien Elementfläche, jedoch relativ klein ist, bildet sich hier abhängig von der Größe des Strömungswiderstandes des Spaltrohres ein Engpaß, indem ein großer Teil des Systemdruckes abfällt. Es treten also geringere Druckverluste auf, was energetisch beim Rückspülen günstiger ist.

Beim Rückspülen wird ein Großteil des Volumendurchsatzes bei konischen und zylindrischen Filterelementen grundsätzlich am unteren Filterende er zielt. Die Volumenströme nehmen dann sehr schnell ab. Da das konische Element wesentlich weiter zurückgespült wird, ist zusätzlich der Geschwindigkeitsgradient geringer, so dass unter Einbeziehung der Geschwindigkeitsprofile bezogen auf die Filteroberfläche sich aufgrund der Elementkonizität ein zusätzlicher Reinigungseffekt gegenüber zylindrischen Elementen ergibt. Durch die erreichte, im wesentlichen konstante Geschwindigkeit bei der Abreinigung der konischen Filterelemente erfolgt dies schonend, was die Standzeit dahingehender Filterelemente verlängert.

Beim Rückspülen werden vorzugsweise alle Filterelemente in chronologischer Abfolge nacheinander regeneriert. Während der Rückspülung einzelner Elemente wird die Filtration über die restlichen Spaltrohre fortgesetzt, so dass der Filtrationsbetrieb bei der bekannten Lösung zu keiner Zeit unterbrochen wird. Der in der Rückspülfiltervorrichtung anstehende Überdruck läßt während der Rückspülphase einen geringen Teilstrom des Filtrates das zu reinigende Filterelement in umgekehrter Richtung durchströmen, wobei der Schmutz vom Element abgelöst und ausgetragen wird. Die mit der Rückspülung einhergehende Ablaufmenge ist nicht genau dosierbar und beruht auf Erfahrungswerten. In der Regel wird zeitlich länger mit großen Mengen rückgespült, um die sichere Abreinigung zu gewährleisten.

Bei den bekannten Lösungen (WO 98/42426, DE 195 42 578 und DE 199 56 859) wird unter das abzureinigende und mithin rückzuspülende Filterelement zur Abfuhr der verschmutzten Fluidrückspülmenge ein Hohlarm unter den einen freien Eintrittsquerschnitt des Filterelementes verschwenkt und von dort aus gelangt die Rückspülmenge über entsprechende Anschlußstücke aus dem Filtergehäuse zur weiteren Aufbereitung heraus. Bei den dahingehend bekannten Lösungen kommt es gegebenenfalls zu Abdichtproblemen im Hinblick auf das Anschließen des Spülarmes an das jeweils rückzuspülende Filterelement und im übrigen benötigt die dahingehende Abfuhreinrichtung für die Rückspülmenge entsprechend viel Einbauraum. Auch kommt es im Hinblick auf die Anzahl an Fluidumlenkungen für die Rückspülmenge bei den bekannten Lösungen zu energetisch ungünstigen Betriebszuständen und zum Bewegen des Spülarmes wird ein entsprechend groß dimensionierter Elektromotor eingesetzt.

Durch die EP-A-0 900 584 ist eine gattungsgemäße Filtervorrichtung als Rückspülfilter bekannt mit einem Filtereinlaß und einem Filterauslaß für das zu filtrierende Fluid, wobei die Filterelemente für eine Filtration von außen nach innen und für eine Rückspülung von innen nach außen durchströmbar sind, wobei die einen Filterelemente in einer Filtrationsstellung die Filtration vornehmen und zumindest ein anderes, weiteres Filterelement zum Abreinigen seiner wirksamen Filterfläche in einer Rückspülstellung rückspülbar ist, wobei mittels einer Schwenkeinrichtung die einzelnen Filterelemente nacheinander von ihrer Filtrationsstellung in die Rückspülstellung und wieder in die Filtrationsstellung gebracht sind, und wobei die Schwenkeinrichtung ein Aufnahmeteil für die Aufnahme der Filterelemente aufweist, das mittels eines Antriebes mit Antriebsteil um eine Schwenkachse drehbar innerhalb des Filtergehäuses angeordnet ist. Als Antrieb dient bei der bekannten Lösung ein Druckgas- oder Druckluftmotor, der über ein schaltbares Steuer- oder Wegeventil an ein Permanent-Druckluftsystem angeschlossen ist und der so gebildete Drehantrieb für die Filterelemente ist mittels dieses Steuer- und Wegeventils sowohl von Hand als auch elektromagnetisch betätigbar. Ferner ist an die genannte Druckluftversorgung eine mehrteilige Ventillösung zusätzlich angeschlossen, die Einbauraum benötigt und das rückzuspülende, kerzenartige Filterelement mit der Druckluft von innen her zwecks Abreinigung beaufschlagt und im übrigen den Ablaß der bei der Rückspülung erhaltenen Schmutzflüssigkeit aus der Filtervorrichtung sicherstellt.

Ausgehend von diesem Stand der Technik liegt der Erfindung die Aufgabe zugrunde, unter Beibehalten der beschriebenen Vorteile die bekannten Filtervorrichtungen dahingehend teilweise weiter zu verbessern, dass Abdichtprobleme beim Rückspülen weitestgehend vermieden sind, dass eine energetisch günstige Rückspülung ermöglicht ist und dass für das Rückspülen an der Filtervorrichtung nur wenig Einbauraum benötigt wird. Eine dahingehende Aufgabe löst eine Filtervorrichtung mit den Merkmalen des Patentanspruches 1 in seiner Gesamtheit.

Dadurch, dass gemäß dem kennzeichnenden Teil des Patentanspruches 1 das Antriebsteil von einem Antrieb in Form eines Pneumatik-Motors antreibbar ist, dessen alternierende Hin- und Herbewegung für sein Abtriebsteil mittels einer Freilaufeinrichtung in eine konstante Antriebsbewegung in einer Antriebsrichtung für das Antriebsteil des Aufnahmeteils umsetzbar ist und dass bei der Filtration das jeweilige Filterelement von innen nach außen und bei der Rückspülung von außen nach innen vom Fluid durchströmt ist, ist mit der dahingehenden Anordnung auf sehr kostengünstige Art und Weise sowie platzsparend ein Antriebskonzept für die Bewegung der einzelnen Filterelemente von ihrer Filtrationsstellung in die Rückspülstellung und von dort wieder in die Filtrationsstellung erreicht. Auch benötigt das dahingehende Antriebskonzept mit Penumatik-Motor wenig Energie.

Da sich insoweit die Schwenkbewegung für die Filterelemente aufgrund der eingesetzten Freilaufeinrichtung gut kontrollieren läßt, lassen sich etwaig bestehende Abdichtungsprobleme besser beherrschen und es kann insoweit auf armartige Rückspüleinrichtungen verzichtet werden, wie auch auf solche mit eigenständiger Drucklufteinbringung und Schmutzflüssigkeitsabfuhr über eine zusätzliche Ventileinrichtung. Die erfindungsgemäße Filtervorrichtung benötigt mithin bezogen auf die Abdichtungsgestaltung sowie den Schwenkantrieb für die Filterelemente innerhalb des Filtergehäuses wenig Bauraum, so dass sich auch bei beengten Platzverhältnissen dahingehende Filtervorrichtungen mit Rückspülmodus realisieren lassen, was bisher Probleme bereitet hat. Des weiteren ergibt sich mit der erfindungsgemäßen Lösung ein verbessertes An- und Abströmverhalten für die zu steuernden Fluidmengen, auch bezogen auf die Rückspülfluidmengen, was energetisch betrachtet dem Filtrationsbetrieb der Gesamt-Filtervorrichtung unter Einbezug der Freilaufeinrichtung zugute kommt und etwaige Abdichtprobleme sind besser beherrschbar.

Während bei den bekannten Rückspülfiltervorrichtungen für die Rückspülung der antreibbare Spülarm vorgesehen ist, der für einen Fluidaustritt für verschmutztes Fluid nacheinander unter die freien Einlaßquerschnitte der Filterelemente zu verfahren ist, braucht mit der erfindungsgemäßen Filtervorrichtung die Schwenkeinrichtung ein entsprechend konzipiertes Aufnahmeteil für die Aufnahme der Filterelemente, das dann mittels eines Antriebes, um eine Schwenkachse drehbar, innerhalb des Filtergehäuses das Anfahren der einzelnen Filterelemente für eine Rückspülung zu der Rückspülstation ermöglicht, ohne dass zusätzliche druckluftgestützte, mit Ventilen ansteuerbare Rückspülvorrichtungen notwendig wären.

Bei einer weiteren besonders bevorzugten Ausführungsform der erfindungsgemäßen Filtervorrichtung ist ein Teil des Filtergehäuses als Deckel konzipiert und weist zu seinen freien Enden hin einen Hohlraum auf, dessen axiale Erstreckung in etwa der Baulänge der Filterelemente entspricht. Bei einem Filtrationsbetrieb, bei dem die vorzugsweise konischen Spaltsiebrohr-Filterelemente von innen nach außen durchströmt werden, ergibt sich im oberen Teil des Filtergehäuses ein Fluidsammelraum, der dem Filtrationsbetrieb wenig Hemmnisse entgegensetzt und somit sich von der Gesamt-Energiebilanz der Filtervorrichtung her gesehen als ausgesprochen günstig erweist, was auch für den Fall gilt, dass von dort entsprechende Mengen für den Rückspülbetrieb eingesetzt werden, bei dem in umgekehrter Folge von außen nach innen das zur Rückspülung anstehende Filterelement mit Fluid durchströmt wird.

Weitere vorteilhafte Ausgestaltungen sind Gegenstand der sonstigen Unteransprüche.

Im folgenden wird die erfindungsgemäße Filtervorrichtung anhand eines Ausführungsbeispiels nach der Zeichnung näher erläutert. Dabei zeigen in prinzipieller und nicht maßstäblicher Darstellung die
- Fig.1: einen Längsschnitt durch die Filtervorrichtung;
- Fig.2: eine perspektivische Seitenansicht auf die Filtervorrichtung nach der Fig.1 und
- Fig.3: teilweise im Schnitt, teilweise in Ansicht, eine Draufsicht auf die Filtervorrichtung nach den Fig.1 und 2.

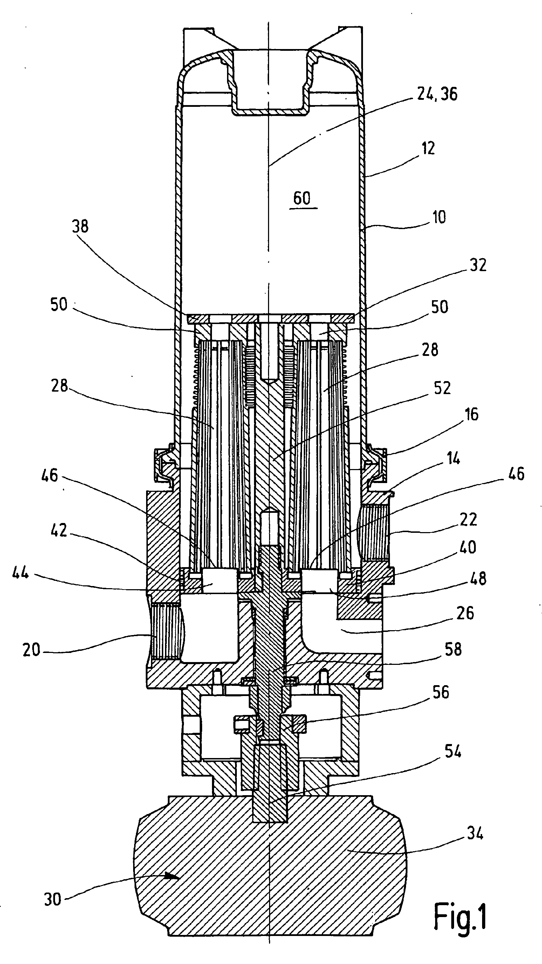

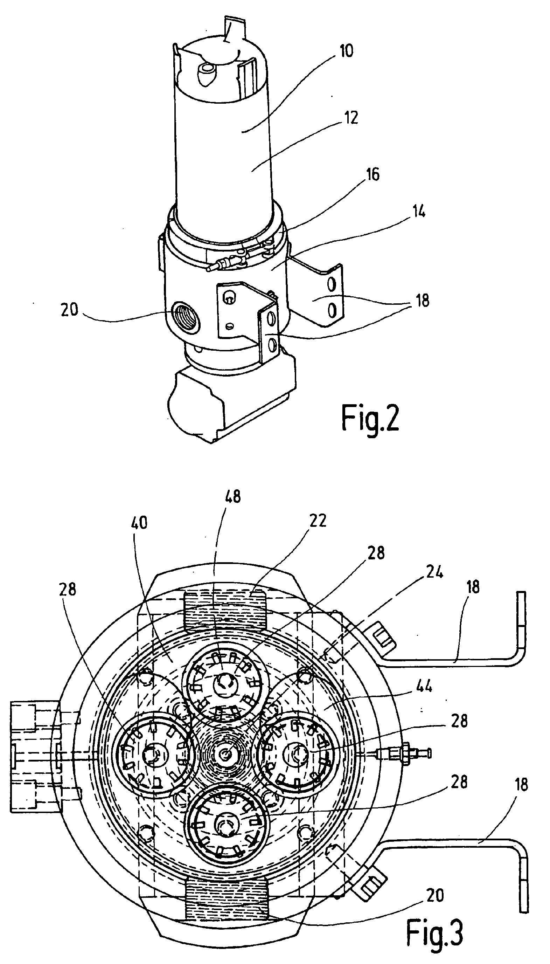

Die in der Fig. 1 gezeigte Filtervorrichtung, insbesondere Rückspülfiltervorrichtung, weist ein zylindrisches Gehäuse 10 auf, bestehend aus einem oberen Gehäuseteil 12 und einem unteren Gehäuseteil 14. Die beiden Gehäuseteile 12,14 lassen sich insbesondere über ein lösbare Konsolenschelle 16 (vgl. Fig.2) lösbar miteinander verbinden. Des weiteren läßt sich das Gehäuse 10 über das untere Gehäuseteil 14 mittels flanschartiger Befestigungsteile 18 an anderen Bauteilen, beispielsweise solche hydraulischer Art, festlegen. Das Filtergehäuse 10 der Rückspülfiltervorrichtung weist des weiteren einen Filtereinlaß 20 auf für das zu filtrierende Fluid sowie einen Filterauslaß 22 für das filtrierte Fluid. Diametral der Längsachse 24 gegenüberliegend ist zu dem Filtereinlaß 20 innerhalb des unteren Gehäuseteils 14 ein Fluidauslaß 26 angeordnet, über den die Rückspülfluidmenge aus der Vorrichtung abführbar ist.

In die Filtervorrichtung sind nach oben hin konisch zulaufende Filterelemente 28 eingesetzt, wobei an die Stelle der konischen Filterelemente 28 auch zumindest teilweise zylindrische Filterelemente (nicht dargestellt) treten können. Die angesprochenen konischen Filterelemente 28, die aus sog. Spaltsiebrohr-Filterelementen bestehen können, sind in Abständen voneinander entlang eines zylindrischen Kreisbogens (vgl. Fig.3) innerhalb des Filtergehäuses 10 angeordnet. Bei einer nicht näher dargestellten Ausführungsform können auch in Gruppen unterteilt mehrfach entlang von zylindrischen Bögen die Filterelemente 28 angeordnet sein. Bei der in den Figuren gezeigten Ausführungsform sind jedoch insgesamt vier Filterelemente 28 diametral einander zur Längsachse 24 der Vorrichtung gesehen gegenüberliegend angeordnet. In Blickrichtung auf die Fig.3 gesehen ist dabei das obere Filterelement 28 in seiner Rückspülstellung gezeigt und die darunter angeordneten Filterelemente 28 befinden sich in ihrer Filtrationsstellung.

Mittels einer als Ganzes mit 30 bezeichneten Schwenkeinrichtung ist es möglich, die einzelnen Filterelemente 28 nacheinander von ihrer Filtrationsstellung in die Rückspülstellung und wieder in die Filtrationsstellung zu bringen, wobei die Umlaufbewegung für die einzelnen Filterelemente 28 sowohl im Uhrzeigersinn als auch im Gegenuhrzeigersinn erfolgen kann.

Die Schwenkeinrichtung 30 selbst weist ein Aufnahmeteil 32 auf für die Aufnahme der einzelnen Filterelemente 28, wobei das Aufnahmeteil 32 mittels eines Antriebes oder Motors 34 um eine Schwenkachse 36 drehbar innerhalb des Filtergehäuses 10 angeordnet ist. Die dahingehende Schwenkachse 36 ist im wesentlichen deckungsgleich mit der Längsachse 24 der Filtervorrichtung.

Das Aufnahmeteil 32 weist zwei gegenüberliegende Endteile 38,40 auf, zwischen denen sich die einzelnen Filterelemente 28 erstrecken, wobei zumindest das Endteil 40, das dem Filtereinlaß 20 zugewandt ist, entlang des Inneren des Filtergehäuses 10 über eine Dichteinrichtung 42 geführt ist. Das jeweilige Endteil 38,40 ist in der Art einer zylindrischen Platte ausgebildet und das untere Endteil 40 weist außenumfangsseitig Ausnehmungen zur Aufnahme von Dichtteilen der Dichteinrichtung 42 auf, wobei derart eine Gleitdichtung erreicht ist zwischen dem Inneren des Filtergehäuses 10 und dem Außenumfang des unteren Endteils 40.

Wie sich insbesondere aus der Fig.3 ergibt, weist das untere Endteil 40 eine nierenförmige Ausnehmung 44 auf, die von dem Filtereinlaß 20 mit Fluid versorgbar ist. Solange gemäß der Darstellung nach der Fig. 3 die drei Filterelemente 28 mit ihrem unteren freien Öffnungsqueschnitt 46 über der nierenförmigen Ausnehmung 44 angeordnet sind, strömt zu filtrierendes Fluid über den Filtereinlaß 20 und die Ausnehmung 44 sowie den unteren Öffnungsquerschnitt 46 in das Innere des jeweiligen Filterelementes 28 ein und durchströmt dabei die Filterelemente 28 von innen nach außen. Etwa im Fluid befindliche Verschmutzungen werden dann auf der inneren Wandung des jeweiligen Hohlfilterelementes abgelagert. Das in Blickrichtung auf die Fig.3 gesehen obere Filterelement 28 ist hiervon ausgenommen und das im Filtergehäuse 10 befindliche Filtrat oder Reinfluid wird in Umkehrrichtung, also von außen nach innen, durch das abzureinigende obere Filterelement 28 geleitet, wobei die derart abgereinigten und erhaltenen Fluidverschmutzungen aus dem Inneren des zur Rückspülung verwendeten Filterelementes 28 und wiederum über seinen unteren freien Öffnungsquerschnitt 46 in Richtung des Fluid-auslasses 26 und mithin aus der Vorrichtung gelangt.

Für den dahingehenden Rückspül-Fluidtransport weist das untere Endteil 40 eine kreisförmige Durchlaßöffnung 48 auf. Am gegenüberliegenden Ende, also nach oben hin, sind die einzelnen Filterelemente 28 abgeschlossen und in dem oberen Endteil 38 aufgenommen, das insofern über Einzelaufnahmen 50 verfügt, in die die oberen freien Enden der Filterelemente 28 eingreifen. Die beiden Endteile 38,40 sind längs der Schwenkachse 26 über ein stabartiges Antriebsteil 52 lösbar miteinander verbunden. Insoweit wäre es also möglich, bei abgenommenem oberen Deckelteil 12 und Lösen der beiden Endteile 38,40 voneinander ein verbrauchtes Filterelement 28 gegen ein neues Element auszutauschen, sofern dies einmal notwendig werden sollte. Das dahingehende Antriebsteil 52 ist von dem Antrieb 34 der Filtervorrichtung antreibbar, der insbesondere in der Art eines Pneumatik-Motors ausgebildet ist.

Der dahingehende Pneumatik-Motor ist dadurch gekennzeichnet, dass sein zapfenartiges Abtriebsteil 54 in Abhängigkeit von der Pumpbewegung der Kolbenteile des Pneumatik-Motors als Antrieb 34 eine alternierende Hin- und Herbewegung durchführt, wobei die dahingehende Hin- und Herbewegung dann mittels einer Freilaufeinrichtung 56 in eine konstante Antriebsbewegung in einer Antriebsrichtung für das Antriebsteil 52 des Aufnahmeteils 32 umsetzbar ist. Als Freilaufeinrichtung 56 kommt dabei insbesondere eine Freilaufhülse zum Einsatz, die mit ihren bewegbaren Komponenten das Abtriebsteil 54 mit dem Antriebsteil 52 koppelt. Für die dahingehende Kopplung ist das stabartige Antriebsteil 52 in Blickrichtung auf die Fig.1 gesehen auf seiner Unterseite mit einer Antriebsachse 58 gekoppelt, die dreh- oder schwenkbar im unteren Gehäuseteil 14 geführt ist.

Die in Rede stehende Freilaufhülse der Freilaufeinrichtung 56 ist in der Lage, die alternierende Hin- und Herbewegung des Antriebes 34 nur in einer Richtung an den Antriebsstrang der Schwenkeinrichtung 30 weiterzugeben, bestehend aus Abtriebsteil 54, Antriebsachse 58 und Antriebsteil 52. In der anderen Richtung überträgt die Freilaufeinrichtung 56 kein Drehmoment an den dahingehenden Antriebsstrang. Die hier zum Einsatz kommende Freilaufhülse mit Innenstern und einzeln angefederten Laufrollen, die jedoch Stand der Technik ist, ist aufgrund ihres geringen Schlupfes bis zum Mitnehmen der Antriebsachse 58 besonders geeignet. Bei der gegenläufigen Drehbewegung für die Freilaufhülse wird dann kein Moment an die Vorrichtung und mithin an den Antriebsstrang abgegeben. Dahingehende Freilaufhülsen und Freilaufeinrichtungen 56 sind Stand der Technik, so dass an dieser Stelle hierauf nicht mehr näher eingegangen wird. Die Antriebsachse 58 kann auch mehrteilig ausgeführt sein, um bei Verschleiß die Auswechselbarkeit von Teilen der dahingehenden Achse zu gewährleisten.

Mit dem genannten Antriebskonzept ist es also möglich, die alternierende Hin- und Herbewegung des Pneumatik-Motors als Antrieb 34 in eine Schwenkbewegung um jeweils 90° für die Filterelemente 28 mittels der Schwenkeinrichtung 30 vorzusehen, um dergestalt in Hintereinanderabfolge immer ein Filterelement 28 in der Rückspülstellung abzureinigen und mit den drei anderen Filterelementen den üblichen Filtrationsbetrieb aufrecht zu erhalten. Bei einer anderen Anzahl an Filterelementen 2,3 oder 5 und mehr ist dann eine andere Stufung für die Drehbewegung über die Freilaufhülse notwendig. Aufgrund der nierenartigen Ausgestaltung der Ausnehmung 44 im unteren Endteil 40 ist darüber hinaus gewährleistet, dass bei der dahingehenden Umstellbewegung weitgehend kontinuierlich mit immer drei Elementen weiter filtriert werden kann. Der jeweilige Rückspülvorgang für ein Filterelement 28 kann in quasi kontinuierlichen Zeitabständen erfolgen; es besteht aber auch die Möglichkeit, über Differenz-Druckmessungen an den Filterelementen 28 jeweils festzustellen, wann dieses für eine Rückspülung zu verwenden ist und das dahingehende Element könnte bei entsprechender Steuerung unmittelbar der Rückspülöffnung 48 zugeführt werden.

Wie sich des weiteren aus der Schnittdarstellung nach der Fig.1 ergibt, weist das obere Gehäuseteil 12 einen freien Hohlraum 60 auf, dessen axiale Erstreckung in etwa der Baulänge der Filterelemente 28 entspricht. Die dahingehende Anordnung hat sich als energetisch besonders günstig erwiesen und der der Durchströmung der Filterelemente 28 im üblichen Filtrationsbetrieb entgegenstehende Widerstand, gebildet durch den Widerstand von Gehäuseteilen des Gehäuses 10, ist dergestalt deutlich verringert. Auch kommt es innerhalb des Hohlraumes 60 zu einem im wesentlichen laminaren Strömungsverhalten, was den Ausströmwiderstand im üblichen Filtrationsbetrieb reduzieren hilft.

Die vorzugsweise zum Einsatz kommenden Spaltsiebrohr-Filterelemente weisen in Richtung der Längsachse 24 der Vorrichtung geneigte Stützstäbe auf, um die unter Freilassen von durch ein Fluid passierbaren Spalten ein Drahtprofil in einzelnen Windungen gewickelt ist, wobei im Bereich einer jeden Berührstelle des Drahtprofils mit dem Stützstab ein Schweißpunkt angeordnet ist. Die für den freien Fluiddurchtritt vorgesehene Spaltgröße, also der Abstand zwischen zwei Spalten, verhindert den Durchtritt von Verschmutzungen, sofern die Partikelgröße die dahingehende Spaltweite übersteigt. In den Spalten festgesetzte Verschmutzungen lassen sich dann über den beschriebenen Rückspülbetrieb aus der Filtervorrichtung entfernen. Das derart abgereinigte Filterelement 28 gelangt dann von der Rückspülstellung zurück in die Filtrationsstellung und kann dort für den weiteren Filtrationseinsatz verwendet werden.

## Patentansprüche

1. Filtervorrichtung für den Einsatz von Filterelementen (28), die in einem Filtergehäuse (10) mit einem Filtereinlaß (20) und einen Filterauslaß (22) für das zu filtrierende Fluid aufnehmbar sind, wobei die Filterelemente (28) für eine Filtration oder Rückspülung in beiden Richtungen durchströmbar sind, wobei die einen Filterelemente (28) in einer Filtrationsstellung die Filtration vornehmen und zumindest ein anderes weiteres Filterelement (28) zum Abreinigen seiner wirksamen Filterfläche in einer Rückspülstellung rückspülbar ist, wobei mittels einer Schwenkeinrichtung (30) die einzelnen Filterelemente (28) nacheinander von ihrer Filtrationsstellung in die Rückspülstellung und wieder in die Filtrationsstellung gebracht sind, wobei die Schwenkeinrichtung (30) ein Aufnahmeteil (32) für die Aufnahme der Filterelemente (28) aufweist, das mittels eines Antriebes (34) um eine Schwenkachse (36) drehbar innerhalb des Filtergehäuses (10) angeordnet ist, wobei das Aufnahmeteil (32) zwei gegenüberliegende Endteile (38,40) aufweist, zwischen denen sich die einzelnen Filterelemente (28) erstrecken, wobei zumindest das Endteil (40), das dem Filtereinlaß (20) zugewandt ist, entlang des Inneren des Filtergehäuses (10) über eine Dichteinrichtung (42) drehbar geführt ist, und wobei die Filterelemente (28) koaxial zu der Schwenkachse (36) innerhalb des Filtergehäuses (10) angeordnet sind, die durch ein stabartiges Antriebsteil (52) gebildet ist, das die beiden Endteile (38,40) lösbar miteinander verbindet, **dadurch gekennzeichnet, dass** das Antriebsteil (52) von einem Antrieb (34) in Form eines Pneumatik-Motors antreibbar ist, dessen alternierende Hin- und Herbewegung für sein Abtriebsteil (54) mittels einer Freilaufeinrichtung (56) in eine konstante Antriebsbewegung in einer Antriebsrichtung für das Antriebsteil (52) des Aufnahmeteils (32) umsetzbar ist und dass bei der Filtration das jeweilige Filterelement (28) von innen nach außen und bei der Rückspülung von außen nach innen vom Fluid durchströmt ist.

2. Filtervorrichtung nach Anspruch 1, **dadurch gekennzeichnet, dass** die Freilaufeinrichtung (56) aus einer Freilaufhülse gebildet ist, die bis zu einem vorgebbaren Drehmoment die Antriebsleistung des Antriebes (34) an das Antriebsteil (52) in einer Richtung abgibt und in der anderen gegenläufigen Richtung kein Antriebsmoment aufbringt.

3. Filtervorrichtung nach Anspruch 1 oder 2, **dadurch gekennzeichnet, dass** die einzelnen Filterelemente (28) konisch ausgebildet und zur Schwenkachse (36) diametral einander gegenüberliegend im Filtergehäuse (10) angeordnet sind und dass dem Antrieb (34) zugewandt die Filterelemente (28) derart ihre weiteste stirnseitige Eintrittsöffnung (46) aufweisen.

4. Filtervorrichtung nach einem der Ansprüche 1 bis 3, **dadurch gekennzeichnet, dass** der Filterauslaß (22) randseitig in dem Teil (14) des Filtergehäuses (10) angeordnet ist, das dem Antrieb (34) zugewandt ist, und dass der andere Teil (12) des Gehäuse (10) deckelartig abnehmbar ist und zu seinem freien Ende hin einen Hohlraum (60) aufweist, dessen axiale Erstreckung in etwa der Baulänge der Filterelemente (28) entspricht.

5. Filtervorrichtung nach einem der Ansprüche 1 bis 4, **dadurch gekennzeichnet, dass** der Filtereinlaß (20) und der Fluidauslaß (26) für die Rückspülmenge in dem Teil (14) des Filtergehäuses (10) angeordnet sind, das sich zwischen dem Filterauslaß (22) und dem Antrieb (34) erstreckt.

6. Filtervorrichtung nach einem der Ansprüche 1 bis 5, **dadurch gekennzeichnet, dass** das jeweilige Filterelement (28) aus einem Spaltsiebrohr-Filterelement gebildet ist.

## Claims

1. A filter apparatus for the use of filter elements (28) which can be accommodated in a filter housing (10) with a filter inlet (20) and a filter outlet (22) for the fluid to be filtered, it being possible for a flow to pass through the filter elements (28) in both directions for filtration or backflushing, the one filter elements (28) in a filtration position undertaking the filtration, and it being possible to backflush at least one other further filter element (28) in a backflushing position in order to clean its effective filter surface, the individual filter elements (28) being brought one after the other from their filtration position into the backflushing position and back into the filtration position by means of a pivot device (30), the pivot device (30) having a receiving part (32) for accommodating the filter elements (28) which is disposed rotatably about a pivot axis (36) by means of a drive (34) within the filter housing (10), the receiving part (32) having two opposing end parts (38, 40) between which the individual filter elements (28) extend, at least the end part (40) which faces towards the filter inlet (20) being rotatably guided along the inside of the filter housing (10) by means of a sealing device (42), and the filter elements (28) being disposed coaxially to the pivot axis (36) within the filter housing (10) which is formed by a bar-type drive part (52) which connects the two end parts (38, 40) to one another releaseably, **characterised in that** the drive part (52) can be driven by a drive (34) in the form of a pneumatic motor the alternating to and fro movement of which for its output part (54) can be converted into a constant drive movement in a drive direction for the drive part (52) of the receiving part (32) by means of a free-wheel device (50), and that during filtration fluid flows through the respective filter element (28) from inside to outside, and during backflushing from outside to inside.

2. The filter apparatus according to Claim 1, **characterised in that** the free-wheel device (56) is formed from a free-wheel casing which up to a pre-specifiable torque delivers the drive power of the drive (34) to the drive part (52) in one direction and in the other opposite direction does not apply any drive torque.

3. The filter apparatus according to Claim 1 or 2, **characterised in that** the individual filter elements (28) are conical in form and are disposed in relation to the pivot axis (36) diametrically opposing one another within the filter housing (10) and that the filter elements (28) thus have their furthermost face side inlet opening (46) facing towards the drive (34).

4. The filter apparatus according to any of Claims 1 to 3, **characterised in that** the filter outlet (22) is disposed on the edge side in the part (14) of the filter housing (10) which faces towards the drive (34) and that the other part (12) of the housing (10) can be removed like a lid and towards its free end has a cavity (60) the axial extension of which corresponds approximately to the overall length of the filter elements (28).

5. The filter apparatus according to any of Claims 1 to 4, **characterised in that** the filter inlet (20) and the fluid outlet (26) for the backflush quantity are disposed in the part (14) of the filter housing (10) which extends between the filter outlet (22) and the drive (34).

6. The filter apparatus according to any of Claims 1 to 5, **characterised in that** the respective filter element (28) is formed from a bar screen tube filter element.

## Revendications

1. Dispositif de filtration pour l'utilisation d'éléments (28) filtrants qui peuvent être logés dans une enveloppe (10) de filtre ayant une entrée (20) de filtre et une sortie (22), de filtre pour le fluide à filtrer, les éléments (28) filtrants pouvant être parcourus dans les deux sens pour une filtration ou un lavage en retour, les uns des éléments (2) filtrants effectuant la filtration dans une position de filtration et au moins un autre élément (28) filtrant supplémentaire pouvant être lavé en retour en une position de lavage en retour pour nettoyer sa surface filtrante efficace, dans lequel au moyen d'un dispositif (30) de pivotement les divers éléments (28) filtrants peuvent passer les uns après les autres de leur position de filtration en la position de lavage en retour et revenir en la position de filtration, le dispositif (30) de pivotement ayant une partie (32) de réception pour la réception des éléments (28) filtrants, qui est montée tournante à l'intérieur de l'enveloppe (10) du filtre autour d'un axe (36) de pivotement au moyen d'un entraînement (34), la partie (32) de réception ayant deux parties (38,40) d'extrémité opposées entre lesquelles les divers éléments (28) filtrants s'étendent, au moins la partie (40) d'extrémité tournée vers l'entrée (20) du filtre étant guidée de manière à pouvoir tourner le long de l'intérieur de l'enveloppe (10) du filtre par un dispositif (42) d'étanchéité et les éléments (28) filtrants étant disposés coaxialement à l'axe (36) de pivotement à l'intérieur de l'enveloppe (10) du filtre, axe qui est formé par une partie (52) d'entraînement du type en barreau, qui relie entre elles de manière amovible les deux parties (38,40) d'extrémité, **caractérisé en ce que** la partie (52) d'entraînement peut être entraînée par un entraînement (34) sous la forme d'un moteur pneumatique, dont le mouvement alterné de va et vient de sa partie (54) de sortie peut être transforme au moyen- d'un dispositif (56) à roue libre, en un mouvement d'entraînement constant dans un sens d'entraînement pour la partie (52) d'entraînement de la partie (52) de réception et **en ce que**, lors de la filtration, l'élément (28) filtrant respectif est parcouru de l'intérieur vers l'extérieur et lors du lavage en retour, de l'extérieur vers l'intérieur.

2. Dispositif de filtration suivant la revendication 1, **caractérisé en ce que** le dispositif (56) à roue libre est formé d'un manchon de roue libre qui, jusqu'à un couple de rotation pouvant être prescrit, cède la puissance d'entraînement (34) à la partie (52) d'entraînement dans un sens et dans l'autre sens opposé n'applique pas de couple d'entraînement.

3. Dispositif de filtration suivant la revendication 1 ou 2,
**caractérisé en ce que** les divers éléments (28) filtrants sont coniques et sont disposés par rapport à l'axe (36) de pivotement en étant opposés diamétralement dans l'enveloppe (10) du filtre et **en ce que**, tournés vers l'entraînement (34), les éléments (28) filtrants ont ainsi leur ouverture (46) d'entrée la plus grande du côté frontal.

4. Dispositif de filtration suivant l'une des revendications 1 à 3,
**caractérisé en ce que** la sortie (22) du filtre est disposée du côté du bord dans la partie (14) de l'enveloppe (10) du filtre qui est tournée vers l'entraînement (34) et **en ce que** l'autre partie (12) de l'enveloppe (10) peut être retirée à la manière d'un couvercle et a en allant vers son extrémité libre une cavité (60) dont l'étendue axiale correspond à peu près à la longueur de construction des éléments (28) filtrants.

5. Dispositif de filtration suivant l'une des revendications 1 à 4,
**caractérisé en ce que** l'entrée (20) du filtre et la sortie (26) de fluide pour la quantité de lavage en retour sont disposées dans la partie (14) de l'enveloppe (10) du filtre, qui s'étend entre la sortie (22) du filtre et l'entraînement (34).

6. Dispositif de filtration suivant l'une des revendications 1 à 5,
**caractérisé en ce que** chaque élément (28) filtrant est formé d'un élément filtrant à tube en barreaux à faible interstice.
